# EUROPÄISCHE PATENTSCHRIFT

(11) **EP 2 327 301 B1**
(45) Veröffentlichungstag und Bekanntmachung des Hinweises auf die Patenterteilung: **17.10.2012**
(21) Anmeldenummer: 10192110.4
(22) Anmeldetag: 22.11.2010
(51) Int. Cl.: A01M 7/00, B05B 9/08, B05B 9/00, A01M 21/04

(54) **Gartenspritze mit Heizvorrichtung**
Garden sprinkler with heating device
Pulvérisateur de jardin doté d'un dispositif de chauffage

(30) Priorität: 20.11.2009 DE 202009015831 U
(43) Veröffentlichungstag der Anmeldung: 01.06.2011
(73) Patentinhaber: Albrecht, Walburga, 41462 Neuss (DE)
(72) Erfinder: Albrecht, Walburga, 41462 Neuss (DE)
(74) Vertreter: Albrecht, Ralf

(56) Entgegenhaltungen:
- NZ-A- 237 524
- US-A- 6 029 589

## Beschreibung

Die vorliegende Erfindung betrifft eine Gartenspritze mit einem tragbaren Behälter zur Aufnahme einer Flüssigkeit, einem mit dem Behälter verbundenen Schlauch, an dem ein Abgabeventil vorgesehen ist, und einer Pumpe, um dem Behälter unter Erhöhung des Behälterinnendrucks Luft zuzuführen.

Derartige tragbare Gartenspritzen werden verwendet, um Flüssigkeiten, insbesondere Insektizide, Herbizide und/oder Fungizide gezielt im Gartenbereich versprühen zu können. Sie besitzen einen Behälter, in den eine Flüssigkeit eingefüllt werden kann, und eine Handpumpe, um in dem Behälter den zum Versprühen der Flüssigkeit notwendigen Druck aufzubauen. Bei den bekannten Gartenspritzen ist an dem freien Ende des Schlauchs dem Abgabeventil nachgeordnet üblicherweise eine Lanze mit einer Auslassdüse vorgesehen, die einen Sprühnebel aus der auszustoßenden Flüssigkeit erzeugt, um sie in geringer und gleichmäßiger Dosierung abgeben zu können. Für das Verspritzen größerer Flüssigkeitsmengen kann die Auslassdüse entsprechend verstellbar sein.

Neben der chemischen Bekämpfung von Unkräutern, Moosen und Ähnlichem werden zunehmend alternative Bekämpfungsmethoden eingesetzt. So hat sich beispielsweise herausgestellt, dass das Besprühen oder Beträufeln von unerwünschten Pflanzen, Moosen oder Ähnlichem mit heißem Wasser überaus geeignet ist, um deren Wachstum zu unterbinden und die Pflanzen abzutöten. Das heiße Wasser bewirkt eine Zerstörung der pflanzeneigenen Eiweiße, so dass ohne die Verwendung von chemischen Mitteln die gewünschte Wirkung erreicht wird.

Die bekannten Gartenspritzen sind jedoch nur bedingt für die Unkrautbekämpfung mit Heißwasser geeignet. Um mit der Gartenspritze heißes Wasser abgeben oder versprühen zu können, ist es erforderlich, das Wasser zu erhitzen und anschließend in die Gartenspritze einzufüllen. Dieser Vorgang benötigt zusammen mit dem erforderlichen Pumpen zur Druckerzeugung in dem Behälter eine gewisse Zeit, in der das Wasser bereits eine Abkühlung erfährt. Wenn die Wassertemperatur soweit absinkt, dass keine Eiweißzerstörung erfolgt, ist eine Bekämpfung von Unkräutern nicht mehr möglich. Auch ist das Hantieren mit heißem und insbesondere mit kochendem Wasser gefährlich und kann zu Verbrühungen führen. Weiterhin kann es vorkommen, dass das Erhitzen der Flüssigkeit nicht direkt an deren Bereitstellungsort möglich ist, so dass ein Umfüllen erforderlich ist.

Die Druckschriften US-A-6,029,589 und NZ-A-237 524 offenbaren Gartenspritzen mit einem tragbaren Behälter zur Aufnahme einer Flüssigkeit, einen mit dem Behälter verbundenen Schlauch, an dem ein Abgabeventil vorgesehen ist, und einen Verdampfer zur Erzeugung von Wasserdampf, mit dem Unkräuter oder ähnliches bekämpft werden kann.

Ausgehend von diesem Stand der Technik ist es eine Aufgabe der vorliegenden Erfindung, eine Gartenspritze der oben genannten Art anzugeben, die besonders gut für die Unkrautbekämpfung ohne chemische Mittel geeignet ist.

Diese Aufgabe wird durch eine Gartenspritze der oben genannten Art dadurch gelöst, dass eine Heizvorrichtung vorgesehen ist, um die Flüssigkeit in dem Behälter zu erhitzen.

Grundgedanke der vorliegenden Erfindung ist es also, die Heißwassererzeugung unmittelbar im Behälter der Gartenspritze durchzuführen. Damit wird die Handhabung deutlich vereinfacht, da es nicht mehr erforderlich ist, heißes Wasser an getrennter Stelle zu erzeugen und in den Behälter einzufüllen.

In bevorzugter Ausgestaltung der Erfindung ist die Heizvorrichtung eine elektrisch betriebene Heizvorrichtung die unter Zufuhr von elektrischer Energie die Flüssigkeit erhitzt. Elektrisch betriebene Heizvorrichtungen können bei geringem Gewicht schnell Wärme erzeugen. Je nach Ausgestaltung der Heizvorrichtung und des Behältervolumens kann ein normaler Netzanschluss (230 V) für den Betrieb ausreichen. Zur Beschleunigung des Heizvorgangs kann jedoch die Verwendung einer Heizvorrichtung zur Verbindung mit einem dreiphasigen Anschluss (400 V) wünschenswert sein.

Dabei kann die Heizvorrichtung an dem Behälter angebracht sein. Die Flüssigkeit wird dann in dem Behälter erhitzt und anschließend über das Abgabeventil verspritzt oder versprüht. Das Erhitzen der Flüssigkeit ist prinzipiell sowohl bei geöffneten wie auch bei geschlossenem Behälter möglich. Wenn der Behälter geschlossen ist, wird beim Erhitzen auch die darin befindliche Luft erwärmt, wodurch der Druck in dem Behälter ansteigt. Somit muss weniger oder gar keine Luft zusätzlich zugeführt werden, um den für den Betrieb erforderlichen Druck in dem Behälter zu erzeugen.

Alternativ ist auch das Erhitzen der Flüssigkeit nach dem Prinzip eines Durchlauferhitzers im Abgabeventil oder

Schlauch möglich. Aufgrund des Gewichts und der Größe der erforderlichen Heizvorrichtung wird jedoch die Handhabung der Gartenspritze erschwert. Außerdem ist für das Erhitzen der Flüssigkeit eine große Wärmemenge erforderlich, die der Gartenspritze bei der Durchlauferhitzung über ein Kabel oder einen Schlauch zugeführt oder in der Form eines Energiespeichers, z.B. einer leistungsstarken Batterie, mittransportiert werden muss. Ersteres schränkt die freie Beweglichkeit ein, während das Mitführen der Batterie das Gewicht der Gartenspritze erhöht.

Vorteilhafterweise kann die Heizvorrichtung eine Heizplatte umfassen, die an der Behälterwand und/oder dem Behälterboden vorgesehen ist. Die Heizplatte kann insbesondere auch in den Behälterboden integriert sein. Dieses Prinzip ist beispielsweise von Wasserkochern bekannt. Dabei kann die Heizvorrichtung bereits bei geringen in dem Behälter befindlichen Flüssigkeitsmengen zuverlässig betrieben werden, ohne dass die Gefahr des "Trockenlaufens" besteht, bei dem die Heizvorrichtung nicht mehr in Kontakt mit der Flüssigkeit steht.

Alternativ oder zusätzlich kann vorgesehen sein, dass die Heizvorrichtung einen Heizstab oder eine Heizspirale umfasst, die sich von der Behälterwand oder dem Behälterboden in den Behälter erstreckt. Vergleichbare Ausgestaltungen sind ebenfalls von Wasserkochern bekannt und haben den Vorteil, dass sie die Wärme besonders effizient an die in dem Behälter befindliche Flüssigkeit übertragen.

Zweckmäßigerweise kann eine elektrische Koppeleinrichtung zur Verbindung der Heizvorrichtung mit einer elektrischen Stromversorgung vorgesehen sein, beispielsweise in der Form eines Steckers oder einer Anschlussbuchse. Dann kann die Heizvorrichtung mit geringem Aufwand an die Stromversorgung angeschlossen werden. Weiterhin kann die Gartenspritze eine von dem Behälter getrennte Basiseinheit aufweisen, wobei die Basiseinheit einerseits mit einer externen elektrischen Energiequelle verbindbar ist und andererseits eine mit der elektrischen Koppeleinrichtung verbindbare Gegensteckeinrichtung aufweist, so dass die Heizvorrichtung über die Basiseinheit mit Strom versorgt werden kann.

In besonders vorteilhafter Ausgestaltung dieser Ausführungsform ist vorgesehen, dass der Behälter und die Basiseinheit derart ausgeführt sind, dass der Behälter an der Basiseinheit insbesondere in einer aufrechten Position stehend oder hängend anbringbar ist, wobei die elektrische Koppeleinrichtung mit der Gegensteckeinrichtung der Basiseinheit elektrisch verbunden ist, wenn der Behälter an der Basiseinheit angebracht ist. Damit ist der Betrieb der Heizvorrichtung auf einfache Weise möglich, indem der Behälter der Gartenspritze in die Halteposition an der Basiseinheit gebracht wird.

Die Basiseinheit kann als Wandhängevorrichtung ausgebildet sein, die bei Nichtbenutzung eine platzsparende Aufbewahrung der Gartenspritze ermöglicht. Die Ausbildung der Basiseinheit als Bodenstation erleichtert den Transport und erlaubt eine flexible Verwendung. Beispielsweise ist in der Bodenstation ein einfaches Befüllen des Behälters über eine an dessen Oberseite vorgesehene Befüllöffnung möglich. Auch zur Luftzufuhr über die Pumpe in den Behälter ist die Bodenstation geeignet, da die Pumpe mit einem großen Hub von oben leicht zu betätigen ist.

Zur elektrischen Verbindung von Beälter und Basiseinheit sind im Stand der Technik - zum Beispiel im Bereich von Wasserkochern - verschiedene Lösungen bekannt, die geeignet sind, um eine zuverlässige elektrische Verbindung herbeizuführen und gleichzeitig ein versehentliches Berühren elektrischer Kontakte verhindern. Derartige Lösungen sind auch gegen Kurzschlüsse aufgrund des Eindringens von Wasser, wie es zum Beispiel bei der Verwendung im Außenbereich durch Regen oder durch beim Befüllen des Behälter verschüttete Flüssigkeit vorkommen kann, zuverlässig geschützt.

Des weiteren kann eine Sicherheitsabschaltvorrichtung vorgesehen sein, um den Betrieb der Heizvorrichtung bei entleertem Behälter zu stoppen. Dies betrifft sowohl den Fall, dass die Heizvorrichtung gestartet wurde, ohne zuvor Flüssigkeit in den Behälter einzufüllen, wie auch ein "Leerkochen", wenn die in dem Behälter ursprünglich vorhandene Flüssigkeit durch das Erhitzen mit der Heizvorrichtung vollständig verdampft. Eine derartige Sicherheitsabschaltung kann mit einem Temperatursensor realisiert werden, der die Temperatur der Heizvorrichtung oder die am Boden innerhalb des Behälters ermittelt. Es ergibt sich jeweils ein für den Betrieb ohne Flüssigkeit charakteristischer Temperaturverlauf. Temperatursensoren sind im Stand der Technik in verschiedensten Ausführungsformen bekannt.

Ferner kann eine temperaturgesteuerte Endabschaltvorrichtung vorgesehen sein, um den Betrieb der Heizvorrichtung zu stoppen, sobald die in dem Behälter befindliche Flüssigkeit eine vorgegebene Temperatur erreicht. Somit muss der Heizvorgang nicht kontinuierlich überwacht werden und unabhängig von der in dem Behälter befindlichen Flüssigkeitsmenge und der Temperatur kann die Flüssigkeit immer mit der selben Temperatur bereitgestellt werden. Dabei kann die vorgegebene Temperatur über eine Einstelleinrichtung, beispielsweise ein Temperaturwahlrad, einstellbar sein. Somit können besonders resistente Unkrautpflanzen mit besonders heißer Flüssigkeit behandelt werden. Außerdem kann ein verstärktes Auskühlen der Flüssigkeit vor oder nach dem Versprühen bzw. Verspritzen berücksichtigt werden, zum Beispiel bei niedrigen Außentemperaturen, so dass die Unkrautpflanzen immer mit ausreichend heißer Flüssigkeit behandelt und wirksam bekämpft werden.

In weiterer Ausgestaltung der Erfindung ist der Behälter und/oder der Sprühschlauch mit einer Wärmedämmschicht ausgeführt. Dies verhindert ein übermäßiges Auskühlen der Flüssigkeit vor dem Verspritzen bzw. Versprühen, so dass die Gartenspritze über einen langen Zeitraum auch zur Bekämpfung einzelnen, voneinander entfernten Orten verwendet werden kann, ohne dass ein wiederholtes Erhitzen der auszustoßenden Flüssigkeit folgen muss. In länger anhaltenden Perioden, in denen keine Flüssigkeit ausgestoßen wird, kann insbesondere die in dem Schlauch befindliche Flüssigkeitsmenge, die bedingt durch den Schlauchumfang gering ist, effektiv gegen Auskühlen geschützt werden, so dass auch nach längerer Nichtverwendung unverzüglich ausreichend heiße Flüssigkeit mit der Gartenspritze verspritzt oder versprüht wird.

In weiterer Ausgestaltung der Erfindung kann eine Anzeigevorrichtung vorgesehen sein, welche die Temperatur der in dem Behälter befindlichen Flüssigkeit und/oder der durch das Abgabeventil strömenden Flüssigkeit anzeigt. Dazu kann beispielsweise ein herkömmliches analoges Thermometer derart vorgesehen sein, dass es mit der in dem Behälter befindlichen Flüssigkeit in Kontakt ist und die gemessene Temperatur außerhalb des Behälters anzeigt. Auch kann eine elektrisch oder elektronisch betriebene Temperaturmesseinrichtung vorgesehen sein, die mit einem Temperaturfühler die Temperatur in dem Behälter oder an dem Abgabeventil misst. Derartige Temperaturfühler können besonders schnell auf Temperaturschwankungen reagieren und unmittelbar erfassen, ob die Temperatur der Flüssigkeit einen gewünschten Wert aufweist. Die Anzeigevorrichtung kann in diesem Fall die ermittelte Temperatur anzeigen, oder lediglich das Über- oder Unterschreiten einer vorgegebenen Grenztemperatur, die für die effektive Bekämpfung von Unkrautpflanzen, Moosen und Ähnlichem erforderlich ist, anzeigen. Der Betrieb derartiger elektrischer bzw. elektronischer Vorrichtungen erfordert nur geringe Energiemengen und kann batteriebetrieben während der Benutzung der Gartenspritze durchgeführt werden.

Weiterhin kann an dem Behälter ein Überdruckventil angebracht sein. Dadurch wird der in dem Behälter vorhandene Druck auf einen maximalen Druck begrenzt, so dass die Flüssigkeit immer unter kontrollierten Bedingungen ausgestoßen werden kann. Durch das Erhitzen der in dem Behälter befindlichen Flüssigkeit findet auch eine Erwärmung der darin befindlichen Luft statt, was zu einer für den Benutzer nicht kontrollierten Druckerhöhung führt. Diese wird durch das Überdruckventil ebenfalls begrenzt.

Schließlich kann ein Standfuß vorgesehen sein, mit dem der Behälter aufstellbar ist. Der Standfuß erleichtert die Handhabung der Gartenspritze, beispielsweise beim Befüllen mit der Flüssigkeit oder bei der Zufuhr von Luft über die Pumpe. Insbesondere beim Pumpen werden starke Kräfte auf den Behälter ausgeübt, die über den Standfuß auf den Untergrund übertragen werden können.

Hinsichtlich weiterer Ausgestaltung der Erfindung wird auf die Unteransprüche sowie auf die nachfolgende Beschreibung eines Ausführungsbeispiels unter Bezugnahme auf die beiliegende Zeichnung verwiesen. In der Zeichnung zeigt:
- Figur 1: eine Schnittansicht einer erfindungsgemäßen Gartenspritze gemäß einer ersten Ausführungsform der vorliegenden Erfindung, und
- Figur 2: eine Schnittansicht einer erfindungsgemäßen Gartenspritze gemäß einer zweiten Ausführungsform der vorliegenden Erfindung.

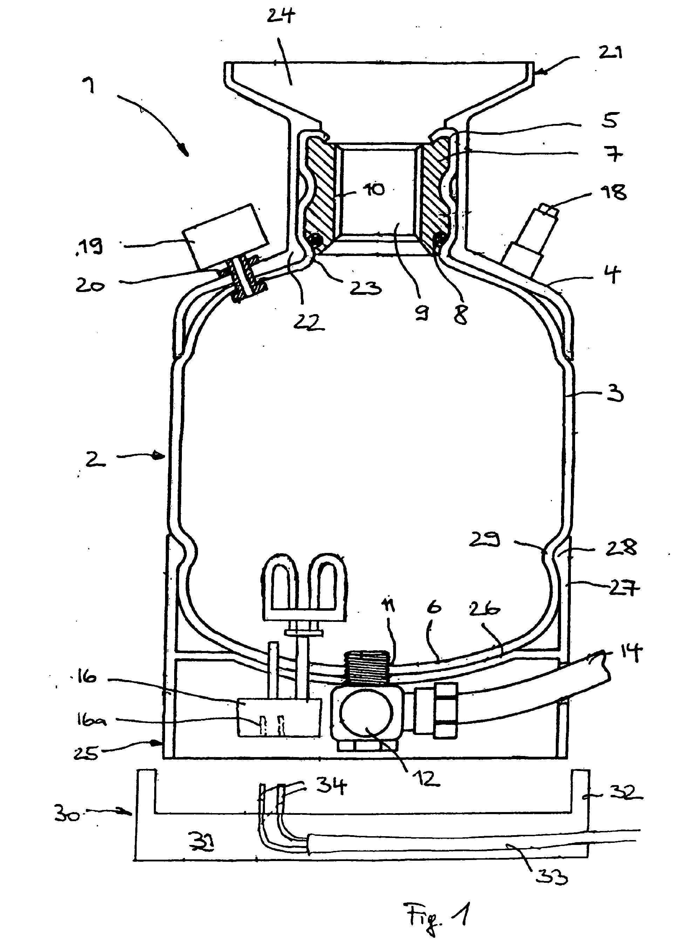

Figur 1 zeigt eine Gartenspritze 1 gemäß einer ersten Ausführungsform der vorliegenden Erfindung. Die Gartenspritze 1 umfasst einen Behälter 2, der einen Bauchbereich mit einer im wesentlichen zylindrischen Seitenwand 3, einen sich nach oben verjüngenden Schulterbereich 4, einen sich daran anschließenden nach oben geöffneten Halsbereich 5 und eine Bodenwand 6 aufweist. Der Behälter 2 ist aus einem druckfesten Metall oder Kunststoff gefertigt.

In den Halsbereich 5 ist ein Verschlusselement 7 eingepresst, das mit dem Halsbereich 5 einen dichten Abschluss bildet. Zur Verbesserung der Dichtwirkung ist eine Ringdichtung 8 zwischen dem Halsbereich 5 und dem Verschlusselement 7 vorgesehen. Das Verschlusselement 7 weist einen kreisförmigen Durchlass 9, der mit einem Innengewinde 10 versehen ist. In das Innengewinde 10 ist eine hier nicht dargestellte Luftpumpe unter Bildung eines druckdichten Behälterverschlusses einschraubbar.

In dem Schulterbereich 4 des Behälters 2 ist ein Überdruckventil 18 vorgesehen, das bei Überschreiten eines vorgegebenen Behälterinnendrucks öffnet. An einem in Figur 1 gegenüberliegenden Teil des Schulterbereichs 4 ist ein Manometer 19 montiert, das über eine Hohlschraube 20 in Druckverbindung mit dem Innenraum des Behälters 2 ist.

Auf dem Behälter 2 ist ein Kopfteil 21 aus Kunststoff oder Metall gesetzt, das den Schulterbereich 4 und den Halsbereich 5 übergreift. Das Kopfteil 21 umfasst eine Wulst 22, mit der es in eine Nut 23 zwischen dem Schulterbereich 4 und dem Halsbereich 5 eingreift, so dass es klemmend mit dem Behälter 2 verbunden ist. An der Oberseite des Kopfteils 21 ist ein Trichter 24 ausgebildet, der sich zu dem Durchlass 9 verjüngt. Das Kopfteil 21 bildet eine Dämmschicht des Behälter 2.

Der Behälter 2 weist an seinem Bodenbereich eine Auslassöffnung 11 auf, in die ein Anschlussstück 12 eingeschraubt ist. An dem Anschlussstück 12 ist ein Schlauch 14 befestigt, dessen hier nicht gezeigtes freies Ende durch ein Abgabeventil verschlossen ist, das integral mit einer ebenfalls nicht gezeigten Spritze ausgeführt ist.

An der Bodenwand 6 des Behälters 2 ist eine elektrisch betriebene Heizvorrichtung 15, die hier als Heizstab dargestellt ist, gehalten. Die Heizvorrichtung 15 ist elektrisch mit einer außerhalb des Behälters 2 vorgesehenen Steuerungseinheit 16 verbunden, welche den Betrieb der Heizvorrichtung 15 steuert. Die Steuerungseinheit 16 ist zusätzlich mit einem Temperatursensor 17 verbunden, der durch die Bodenwand 6 in den Behälter 2 geführt ist. Außerdem ist die Steuerungseinheit 16 mit einer nur angedeuteten elektrischen Koppeleinrichtung 16a in der Form einer Anschlussbuchse zur Verbindung mit einer elektrischen Stromversorgung ausgeführt ist.

Weiterhin ist an der Unterseite des Behälters 2 ein Standfuß 25 vorgesehen, der zylinderförmig ausgebildet ist. Der Standfuß 25 weist einen Zwischenboden 26 auf, der im Wesentlichen an der Bodenwand 6 des Behälters 2 anliegt. Von dem Zwischenboden 26 erstreckt sich ein Haltebereich 27 des Standfusses 25 entlang des Behälters 2 nach oben. Innenseitig weist der Umfassungsbereich 27 an seinem oberen Ende eine ringförmige Innenwulst 28 auf, die in eine ringförmige Vertiefung 29 des Behälters 2 eingreift, um den Standfuß 25 an dem Behälter 2 zu fixieren. Von dem Zwischenboden 26 erstreckt sich der Standfuß 25 derart nach unten, dass er die Steuerungseinheit 16 und das Anschlussstück 12 überdeckt. Der Standfuß 25 ist nach unten offen ausgeführt.

Wie die Figur 1 zeigt, gehört zu der Gartenspritze 1weiterhin eine Basiseinheit 30, die von dem Behälter 2 getrennt ist. Die Basiseinheit 30 ist als Bodenstation ausgebildet und umfasst eine Bodenplatte 31 und eine Umfangswand 32, die eine Aufnahme für den Standfuß 25 bilden, in welche der Behälter 2 in einer aufrechten Position eingestellt werden kann. Die Basiseinheit 30 ist über ein elektrisches Kabel 33 an eine nicht näher gezeigte elektrische Stromversorgung angeschlossen. Das Kabel 33 ist mit einer Gegensteckeinrichtung verbunden, die hier vereinfacht dargestellt durch zwei elektrische Steckkontakte 34 gebildet wird, die sich von der Bodenplatte 31 nach oben erstrecken und in Eingriff mit der Anschlussbuchse 16a des Behälters 2 kommt, wenn dieser in die Basiseinheit 30 eingestellt wird.

Im Weiteren wird die Verwendung der Gartenspritze 1 näher beschrieben.

Zunächst wird der Behälter 2 mit dem Standfuß 25 in der Basiseinheit 30 in einer aufrechten Position positioniert. Dabei 30 greifen die elektrischen Kontakte 34 in die Anschlussbuchse 16a der Steuerungseinheit 16 ein, so dass die Steuerungseinheit 16 mit der elektrischen Stromversorgung verbunden wird. Zur Bekämpfung von Unkräutern, Moosen und Ähnlichem ohne chemische Mittel wird Wasser über den Trichter 24 und den Durchlass 9 in den Behälter 2 eingefüllt. Anschließend wird der Durchlass 9 durch das Eindrehen der Pumpe druckdicht abgeschlossen. Der Betrieb der Heizvorrichtung 15 wird über einen nicht gezeigten Schalter, der mit der Steuerungseinheit 16 verbunden ist, gestartet. Die Steuerungseinheit 16 überwacht über den Temperatursensor 17 die Temperatur des Wassers in dem Behälter 2 und stoppt den Betrieb der Heizvorrichtung 15, sobald das in dem Behälter 2 befindliche Wasser eine vorgegebene Temperatur erreicht. Die vorgegebene Temperatur wird über ein hier nicht näher gezeigtes Einstellrad eingestellt. In dem Fall, dass der Betrieb der Heizvorrichtung 15 über den Schalter gestartet wird, ohne dass eine Flüssigkeit in den Behälter 2 eingefüllt wurde, wird dies ebenfalls von der Steuerungseinheit 16 über den Temperatursensor 17 erfasst, da die Heizvorrichtung 15 eine besonders schnelle Erwärmung der in dem Behälter 2 befindlichen Luft erzielt, die von der Steuerungseinheit 16 erkannt wird. Somit beinhaltet die Steuerungseinheit 16 sowohl die Funktion einer Sicherheitsabschaltvorrichtung wie auch die einer temperaturgesteuerten Endabschaltvorrichtung.

Während des Erhitzens des in dem Behälter 2 befindlichen Wassers bewirkt eine damit einhergehende Temperaturerhöhung der ebenfalls darin befindlichen Luft einen Anstieg des Behälterinnendrucks. Falls dieser Druck einen vorgegebenen kritischen Wert übersteigt, wird durch das Überdruckventil 18 Luft aus dem Behälter 2 abgelassen und ein weiterer Druckanstieg verhindert. Nach dem Ende des Heizvorgangs kann an dem Manometer 19 der in dem Behälter 2 befindliche Druck abgelesen werden. In dem Fall, dass der Druck für den Betrieb der Gartenspritze 1 nicht ausreichend ist, kann über die Pumpe zusätzliche Luft in den Behälter 2 eingebracht werden, bis ein gewünschter Behälterinnendruck erreicht ist.

Nun kann der Behälter 2 aus der Basiseinheit 30 entnommen und verwendet werden. Dazu kann die Gartenspritze 1 mit einer nicht gezeigten Tragevorrichtung beispielsweise auf dem Rücken oder in der Hand getragen werden. Über das Abgabeventil wird das Wasser durch den Auslass 11, das Anschlussstück 12, den Schlauch 14 und das Abgabeventil mit der Spritze aus dem Behälter 2 gespritzt. Je nach gewünschtem Verwendungszweck kann auch eine Spritze mit einer Sprühvorrichtung verwendet werden, die das Wasser fein zerstäubt und so eine besonders geringe Dosierung ermöglicht.

Wenn während der Verwendung der Druck in dem Behälter 2 nicht mehr für ein zuverlässiges Verspritzen des Wasser ausreicht, kann der Behälter 2 auf dem Standfuß 25 abgestellt werden, so dass eine sichere Betätigung der Pumpe möglich ist, um durch erneute Luftzufuhr den Behälterinnendruck zu erhöhen.

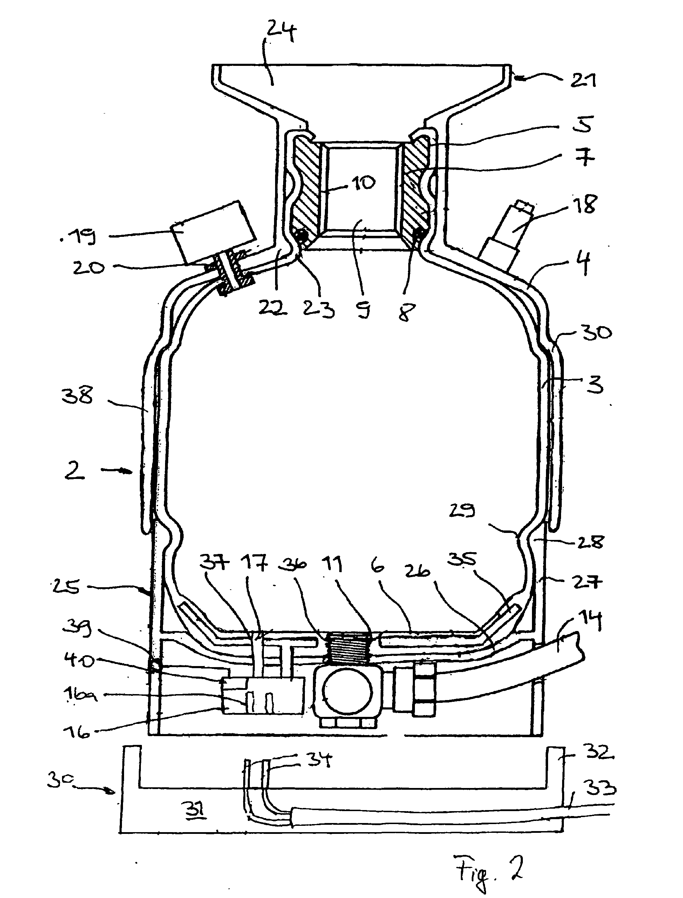

Figur 2 zeigt eine Gartenspritze 1 gemäß einer zweiten Ausführungsform der vorliegenden Erfindung. Da wesentliche Komponenten mit denen der ersten Ausführungsformen übereinstimmen, werden hierfür die selben Bezugszeichen verwendet.

Der Grundaufbau der Gartenspritze 1 ist im Wesentlichen identisch mit dem der ersten Ausführungsform. Ein Unterschied besteht zunächst darin, dass eine tellerförmige Heizvorrichtung 35 in die Bodenwand 6 des Behälters 2 integriert ist. Sie weist in ihrer Mitte einen Durchlass 36 auf, über den der Auslass 10 mit dem Anschlussstück 12 verbunden ist. Durch eine Aussparung 37 ist der Temperatursensor 17 in den Behälter 2 geführt.

Weiterhin unterscheidet sich die zweite Ausführungsform von der ersten dadurch, dass das Kopfteil 21 eine Schürze 38 aufweist, die sich von dem Schulterbereich 4 entlang der Seitenwand 3 des Behälters 2 erstreckt. Somit bilden das Kopfteil 21 mit dem Zwischenboden 26 und dem Umfassungsbereich 27 des Standfußes 25 eine geschlossene Dämmschicht um den Behälter 2, wodurch ein Auskühlen der in dem Behälter 2 befindlichen Flüssigkeit verzögert wird. Schließlich umfasst die Gartenspritze 1 der zweiten Ausführungsform eine Anzeigevorrichtung in der Form einer LED 39, die mit der Steuerungseinheit 16 elektrisch verbunden ist. Dazu umfasst die Steuerungseinheit 16 ein separates Funktionsmodul 40, das batteriebetrieben ohne Anschluss an die elektrische Stromversorgung funktioniert. Sobald der Behälter 2 aus der Basiseinheit 30 entnommen ist, wird dieses Funktionsmodul 40 aktiviert. Es misst über den Sensor 17 die Temperatur der in dem Behälter 2 befindlichen Flüssigkeit und zeigt über die LED 39 an, wenn eine vorgegebene Grenztemperatur unterschritten wird und eine effektive Bekämpfung von Unkräutern, Moosen und Ähnlichem nicht mehr möglich ist.

Der Betrieb der Gartenspritze 1 der zweiten Ausführungsform ist identisch zu dem der Gartenspritze 1 der ersten Ausführungsform. Zusätzlich kann jedoch das Unterschreiten der Grenztemperatur der in dem Behälter 2 befindlichen Flüssigkeit über die LED 39 überwacht werden, so dass der Behälter 2 beim Unterschreiten der Grenztemperatur erneut mit der Basiseinheit 30 verbunden werden kann, um das in dem Behälter 2 befindliche Wasser mit der Heizvorrichtung 35 über die Grenztemperatur zu erhitzen.

Die erfindungsgemäßte Gartenspritze 1 kann insbesondere zur Unkrautbekämpfung eingesetzt werden, wobei auf chemische Zusatzmittel verzichtet werden kann, was mit einer preisweerten, einfachen und naturfreundlichen Anwendung einhergeht. Darüber hinaus kann die erfindungsgemäßte Gartenspritze 1 zur Beseitigung von Insekten, wie beispielsweise Ameisen oder Kellerasseln, sowie von Algen, Moosen oder dergleichen verwendet werden.

## Patentansprüche

1. Gartenspritze mit einem tragbaren Behälter (2) zur Aufnahme einer Flüssigkeit, einem mit dem Behälter (2) verbundenen Schlauch (14), an dem ein Abgabeventil vorgesehen ist, und einer Pumpe, um dem Behälter (2) unter Erhöhung des Behälterinnendrucks Luft zuzuführen, **dadurch gekennzeichnet, dass** eine Heizvorrichtung (15, 35) vorgesehen ist, um die Flüssigkeit in dem Behälter (2) zu erhitzen.

2. Gartenspritze nach Anspruch 1, **dadurch gekennzeichnet, dass** die Heizvorrichtung (15, 35) eine elektrisch betriebene Heizvorrichtung ist.

3. Gartenspritze nach einem der Ansprüche 1 oder 2, **dadurch gekennzeichnet, dass** die Heizvorrichtung (15, 35) an dem Behälter (2) vorgesehen ist.

4. Gartenspritze nach Anspruch 3, **dadurch gekennzeichnet, dass** die Heizvorrichtung (35) eine Heizplatte umfasst, die an der Behälterwand (3) und/oder mit dem Behälterboden (6) vorgesehen und insbesondere integral damit ausgebildet ist.

5. Gartenspritze nach Anspruch 3 oder 4, **dadurch gekennzeichnet, dass** die Heizvorrichtung (15) einen Heizstab oder eine Heizspirale umfasst, die sich von der Behälterwand (3) oder dem Behälterboden (6) in den Behälter (2) erstreckt.

6. Gartenspritze nach einem der Ansprüche 2 bis 5, **dadurch gekennzeichnet, dass** eine elektrische Koppeleinrichtung zur Verbindung der Heizvorrichtung (15, 35) mit einer elektrischen Stromversorgung vorgesehen ist.

7. Gartenspritze nach Anspruch 6, **dadurch gekennzeichnet, dass** eine von dem Behälter (2) getrennte Basiseinheit (30) vorgesehen ist, wobei die Basiseinheit (30) einerseits mit einer externen elektrischen Energiequelle verbindbar ist und andererseits eine mit der elektrischen Koppeleinrichtung verbindbare Gegeneinrichtung (34) aufweist, so dass die Heizvorrichtung (15, 35) über die Basiseinheit (30) mit Strom versorgt werden kann.

8. Gartenspritze nach Anspruch 7, **dadurch gekennzeichnet, dass** der Behälter (2) und die Basiseinheit (30) derart ausgeführt sind, dass der Behälter (2) an der Basiseinheit (30) insbesondere in einer aufrechten Position stehend oder hängend anbringbar ist, wobei die elektrische Koppeleinrichtung (16a) mit der Gegensteckeinrichtung (34) der Basiseinheit (30) elektrisch verbunden ist, wenn der Behälter (2) an der Basiseinheit (30) angebracht ist.

9. Gartenspritze nach einem der Ansprüche 3 bis 8, **dadurch gekennzeichnet, dass** eine Sicherheitsabschaltvorrichtung vorgesehen ist, um den Betrieb der Heizvorrichtung (15, 35) bei entleertem Behälter (2) zu stoppen.

10. Gartenspritze nach einem der Ansprüche 3 bis 9, **dadurch gekennzeichnet, dass** eine temperaturgesteuerte Endabschaltvorrichtung vorgesehen ist, um den Betrieb der Heizvorrichtung (15, 35) zu stoppen, sobald die in dem Behälter (2) befindliche Flüssigkeit eine vorgegebene oder vorgebbare Maximaltemperatur erreicht.

11. Gartenspritze nach Anspruch 10, **dadurch gekennzeichnet, dass** eine Einstelleinrichtung vorgesehen ist, um die Maximaltemperatur vorzugeben.

12. Gartenspritze nach einem der vorhergehenden Ansprüche, **dadurch gekennzeichnet, dass** eine Anzeigevorrichtung (39) vorgesehen ist, welche die Temperatur der in dem Behälter (2) befindlichen Flüssigkeit und/oder der durch das Abgabeventil oder den Schlauch (14) strömenden Flüssigkeit anzeigt.

13. Gartenspritze nach einem der vorhergehenden Ansprüche, **dadurch gekennzeichnet, dass** der Behälter (2) und/oder der Schlauch (14) mit einer Wärmedämmschicht (21, 26, 27) ausgeführt sind.

14. Gartenspritze nach einem der vorhergehenden Ansprüche, **dadurch gekennzeichnet, dass** an dem Behälter (2) ein Überdruckventil (18) angebracht ist.

15. Gartenspritze nach einem der vorhergehenden Ansprüche, **dadurch gekennzeichnet, dass** dem Behälter (2) ein Standfuß (25) zugeordnet ist, um den Behälter (2) aufzustellen.

## Claims

1. A garden spraying device comprising a portable container (2) for holding a liquid, a tube (14) connected to the container (2) on which a discharge valve is provided, and a pump in order to supply air to the container (2) by increasing the internal pressure of the container, **characterized in that** a heating apparatus (15, 35) is provided in order to heat the liquid within the container (2).

2. The garden spraying device according to Claim 1, **characterized in that** the heating apparatus (15, 35) is an electrically operated heating apparatus.

3. The garden spraying device according to either of Claims 1 or 2, **characterized in that** the heating apparatus (15, 35) is provided on the container (2).

4. The garden spraying device according to Claim 3, **characterized in that** the heating apparatus (35) comprises a heating plate which is provided on the container wall (3) and/or with the container base (6), and in particular is formed integrally with the latter.

5. The garden spraying device according to Claim 3 or 4, **characterized in that** the heating apparatus (15) comprises a heating rod or a heating spiral that extends from the container wall (3) or the container base (6) into the container (2).

6. The garden spraying device according to any of Claims 2 to 5, **characterized in that** an electrical coupling device is provided for connecting the heating apparatus (15, 35) to an electrical power supply.

7. The garden spraying device according to Claim 6, **characterized in that** a base unit (30) separate from the container (2) is provided, the base unit (30) on the one hand being connectable to an external electrical energy source, and on the other hand having a counter-device (34) that can be connected to the electrical coupling device so that the heating apparatus (15, 35) can be supplied with current by means of the base unit (30).

8. The garden spraying device according to Claim 7, **characterized in that** the container (2) and the base unit (30) are designed such that the container (2) can be affixed to the base unit (30) in particular standing in an upright position or suspended, the electrical coupling device (16a) being connected electrically to the counter-plugging device (34) of the base unit (30) when the container (2) is affixed to the base unit (30).

9. The garden spraying device according to any of Claims 3 to 8, **characterized in that** a safety shutdown apparatus is provided in order to halt operation of the heating apparatus (15, 35) when the container (2) is empty.

10. The garden spraying device according to any of Claims 3 to 9, **characterized in that** a temperature-controlled final shutdown apparatus is provided in order to halt operation of the heating apparatus (15, 35) as soon as the liquid located within the container (2) has reached a pre-specified or pre-specifiable maximum temperature.

11. The garden spraying device according to Claim 10, **characterized in that** a setting device is provided in order to specify the maximum temperature.

12. The garden spraying device according to any of the preceding claims, **characterized in that** a display apparatus (39) is provided which displays the temperature of the liquid located within the container (2) and/or of the liquid flowing through the discharge valve or the tube (14).

13. The garden spraying device according to any of the preceding claims, **characterized in that** the container (2) and/or the tube (14) are made with a thermal insulation layer (21, 26, 27).

14. The garden spraying device according to any of the preceding claims, **characterized in that** a pressure relief valve (18) is affixed to the container (2).

15. The garden spraying device according to any of the preceding claims, **characterized in that** a supporting foot (25) is assigned to the container (2) for positioning of the container (2).

## Revendications

1. Pulvérisateur de jardin comprenant un réservoir portable (2) pour transporter un liquide, un boyau (14) relié audit réservoir (2) et pourvu d'une valve d'évacuation, et une pompe qui achemine de l'air dans le réservoir (2) en y augmentant la pression intérieure, **caractérisé en ce qu'**un système de chauffage (15, 35) est intégré afin de réchauffer le liquide contenu dans le réservoir (2).

2. Pulvérisateur de jardin selon la revendication 1, **caractérisé en ce que** le système de chauffage (15, 35) est un système de chauffage activé par électricité.

3. Pulvérisateur de jardin selon la revendication 1 ou 2, **caractérisé en ce que** le système de chauffage (15, 35) est intégré au réservoir (2).

4. Pulvérisateur de jardin selon la revendication 3, **caractérisé en ce que** le système de chauffage (35) comprend une plaque chauffante installée, en y étant plus particulièrement complètement intégrée, sur la paroi du réservoir (3) et/ou au fond du réservoir (6).

5. Pulvérisateur de jardin selon les revendications 3 ou 4, **caractérisé en ce que** le système de chauffage (15) comprend une baguette ou une spirale de chauffage qui s'étend à partir de la paroi (3) ou du fond (6) dans le reste du réservoir (2) .

6. Pulvérisateur de jardin selon la revendication 2 et 5, **caractérisé en ce qu'**un dispositif de couplage est prévu pour le raccordement du système de chauffage (15, 35) au courant électrique.

7. Pulvérisateur de jardin selon la revendication 6, **caractérisé en ce qu'**une base (30) séparée du réservoir (2) est prévue, la base (30) étant d'un côté raccordable à une source d'énergie et, d'un autre côté, disposant d'une prise inverse (34) pouvant être relié au dispositif de couplage électrique de façon à ce que le système de chauffage (15, 35) puisse être alimenté en énergie grâce à la base (30).

8. Pulvérisateur de jardin selon la revendication 7, **caractérisé en ce que** le réservoir (2) et la base (30) sont construits de telle façon que le réservoir (2) peut être branché à la base (30), particulièrement dans une position droite ou accrochée, le dispositif de couplage électrique (16a) étant lié électriquement à la prise inverse (34) de la base (30) lorsque le réservoir (2) est branché à la base (30) .

9. Pulvérisateur de jardin selon l'une des revendications 3 à 8, **caractérisé en ce qu'**un commutateur de sécurité et prévu afin de désactiver le système de chauffage (15, 35) lorsque le réservoir (2) est vide.

10. Pulvérisateur de jardin selon la revendication 3 à 9, **caractérisé en ce qu'**un dispositif d'arrêt à commande thermique est prévu afin de désactiver le système de chauffage (15, 35) aussitôt que le liquide qui se trouve dans le réservoir (2) atteint une température prédéfinie ou préréglable.

11. Pulvérisateur de jardin selon la revendication 10, **caractérisé en ce qu'**un dispositif d'ajustement est prévu afin de déterminer la température maximale.

12. Pulvérisateur de jardin selon l'une des revendications précédentes, **caractérisé en ce qu'**un dispositif d'affichage (39) monté sur l'appareil affiche la température du liquide contenu dans le réservoir (2) et/ou du liquide qui s'écoule par la valve d'évacuation ou le boyau (14).

13. Pulvérisateur de jardin selon l'une des revendications précédentes, **caractérisé en ce que** le réservoir (2) et/ou le boyau (14) sont pourvus d'une couche isolante (21, 26, 27).

14. Pulvérisateur de jardin selon l'une des revendications précédentes, **caractérisé en ce qu'**une valve de dépressurisation (18) est installée sur le réservoir (2).

15. Pulvérisateur de jardin selon l'une des revendications précédentes, **caractérisé en ce que** le réservoir (2) est équipé d'un socle (25) qui permet de poser le réservoir (2).
